(19) Europäisches Patentamt
European Patent Office
Office européen des brevets

(11) EP 2 790 924 B2

(12) # NOUVEAU FASCICULE DE BREVET EUROPEEN
Après la procédure d'opposition

(45) Date de publication et mention de la décision concernant l'opposition:
**26.03.2025 Bulletin 2025/13**

(45) Mention de la délivrance du brevet:
**21.02.2018 Bulletin 2018/08**

(21) Numéro de dépôt: **12799188.3**

(22) Date de dépôt: **12.12.2012**

(51) Classification Internationale des Brevets (IPC):
***B60C 1/00*** (2006.01) ***C08J 3/22*** (2006.01)
***C08K 3/04*** (2006.01) ***C08K 5/00*** (2006.01)

(52) Classification Coopérative des Brevets (CPC):
**C08J 3/22; B60C 1/0016; C08K 3/04;**
**C08K 5/0016;** C08J 2321/00

(86) Numéro de dépôt international:
**PCT/EP2012/075140**

(87) Numéro de publication internationale:
**WO 2013/087657 (20.06.2013 Gazette 2013/25)**

(54) **COMPOSITION ELASTOMERIQUE PRESENTANT UNE TRES BONNE DISPERSION DE LA CHARGE DANS LA MATRICE ELASTOMERIQUE**

ELASTOMERE ZUSAMMENSETZUNG MIT SEHR GUTER DISPERSION DES FÜLLSTOFFES IN DER ELASTOMEREN MATRIX

ELASTOMERIC COMPOSITION HAVING A VERY GOOD DISPERSION OF THE FILLER IN THE ELASTOMERIC MATRIX

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2011 FR 1161463**

(43) Date de publication de la demande:
**22.10.2014 Bulletin 2014/43**

(73) Titulaire: **Compagnie Générale des Etablissements Michelin**
**63000 Clermont-Ferrand (FR)**

(72) Inventeurs:
- **SEVIGNON, Marc**
**F-63040 Clermont-Ferrand Cedex 9 (FR)**
- **BELIN, Cécile**
**F-63040 Clermont-Ferrand Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-B1- 2 652 015**
**WO-A1-2012/080109**
**WO-A1-2012/080111**
**WO-A2-2011/034585**
**WO-A2-2011/034585**
**US-A- 3 700 621**
**US-A- 6 075 084**

- **ANONYMOUS: "Standard classification system for Carbon blacks used in rubber products", ASTM D1765-96, 1996, pages 1 - 4, XP055532181**
- **DATABASE WPI Week 201127, Derwent World Patents Index; AN 2011-D05579, XP002677928**
- **DATABASE WPI Week 200757, Derwent World Patents Index; AN 2007-593622, XP002677929**
- **DATABASE WPI Week 201011, Derwent World Patents Index; AN 2010-A85920, XP002677930**
- **"ASTM D6556 - 10 Standard Test Method for Carbon Black Total and External Surface Area by Nitrogen Adsorption", ANNUAL BOOK OF ASTM STANDARDS, PHILADELPHIA, PA, US, vol. 9.01, 1 January 2010 (2010-01-01), pages 1086 - 1090, XP008142633, ISSN: 0192-2998, DOI: 10.1520/ D6556-10**

EP 2 790 924 B2

## Description

L'invention concerne une composition de caoutchouc notamment pour bande de roulement de pneumatique, et plus particulièrement pour pneumatique destiné à équiper des véhicules portant de lourdes charges et roulant à vitesse soutenue, tels que, par exemple les camions, tracteurs, remorques ou bus routiers, avion etc.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. Or depuis que les économies de carburant et la nécessité de protéger l'environnement sont devenues une priorité, il est important que les pneumatiques aient une faible consommation d'énergie. L'une des sources de dissipation d'énergie est l'échauffement du pneumatique.

De la même façon, il est connu que les bandes de roulement des pneumatiques utilisés pour le Génie Civil sont particulièrement sensibles à l'augmentation de température. Or on cherche sans cesse à améliorer les propriétés des pneumatiques et en particulier leur résistance à l'usure et, classiquement, l'amélioration de la résistance à l'usure est connue pour se traduire par une augmentation de la consommation d'énergie.

Afin d'obtenir une telle amélioration en terme résistance à l'usure et de consommation d'énergie, on a cherché à utiliser en bande de roulement, de charges renforçantes plus fines notamment des noirs de carbone dits « fins », c'est-à-dire ayant une surface spécifique CTAB supérieure ou égale à 90 $m^2/g$, voire même des noirs dits « très fins », c'est-à-dire des noirs de carbone ayant une surface spécifique CTAB supérieure ou égale à 130 $m^2/g$. Mais pour obtenir les propriétés de renforcement et d'hystérèse optimales conférées par une charge dans une bande de roulement de pneumatique et ainsi une haute résistance à l'usure et une basse résistance au roulement, on sait qu'il convient d'une manière générale que cette charge soit présente dans la matrice élastomérique sous une forme finale qui soit à la fois la plus finement divisée possible et répartie de la façon la plus homogène possible. De telles conditions ne peuvent être réalisées que dans la mesure où cette charge présente une très bonne aptitude, d'une part à s'incorporer dans la matrice lors du mélange avec l'élastomère et à se désagglomérer, d'autre part à se disperser de façon homogène dans cette matrice.

Or les noirs très fins sont connus pour être extrêmement difficile à correctement disperser dans la matrice élastomérique et engendrent une dégradation de la processabilité (par rapport à l'utilisation de noirs moins fins à iso-taux). Une solution pour l'homme du métier serait l'utilisation d'huile ou de résine plastifiante pour améliorer la processabilité, cependant il est connu que l'utilisation de tels plastifiants avec ces noirs très fins a pour conséquence une dégradation très importante des propriétés d'énergie rupture (propriétés d'allongement à la rupture et de contrainte à la rupture).

Il est connu du document WO2011/034585 une composition de caoutchouc pour un pneumatique. Cette composition comprenant un latex de caoutchouc naturel, du noir de carbone ayant une CTAB de 149 $m^2/g$ et un système de réticulation. Cette composition est préparée en utilisant des techniques pour la fabrication de mélange maître. Cette composition ne comprend pas une huile plastifiante.

Il est connu du document JP2011057967 une composition comprenant un élastomère diénique, du noir de carbone ayant une surface CTAB allant de 100 à 170 $m^2/g$ et une résine hydrocarbonée. Cette composition est obtenue par des procédés conventionnels utilisés pour la fabrication de composition de caoutchouc.

Il est connu du document JP2007161818 une composition comprenant un élastomère diénique, du noir de carbone ayant une surface CTAB allant de 100 à 300 $m^2/g$ et un polymère liquide ayant une masse moléculaire moyenne en poids allant de 1000 à 10000. Cette composition est obtenue par des procédés conventionnels utilisés pour la fabrication de composition de caoutchouc.

La demanderesse a découvert de façon surprenante, contrairement aux connaissances de l'homme du métier, que la combinaison de noirs de carbones très fins dans des compositions de caoutchouc présentant une très bonne dispersion de la charge dans la matrice élastomérique, et en présence de certaines huiles plastifiantes spécifiques, permettait à la fois d'obtenir une bonne processabilité sans dégrader les propriétés limites à la rupture.

L'invention a ainsi pour objet une composition de caoutchouc à base d'au moins un élastomère diénique, une charge renforçante comprenant au moins du noir de carbone ayant une surface spécifique CTAB, mesurée selon la norme NF T 45-007 de novembre 1987, supérieure ou égale à 130 $m^2/g$, une huile plastifiante ainsi qu'un système de réticulation, la dispersion de la charge dans la matrice élastomérique ayant une note Z, telle que définie en page 6, supérieure ou égale à 70 et dans laquelle le taux d'huile plastifiante de la composition varie de 2 à 50 parties pour cent parties en poids d'élastomère.

De préférence le taux de huile plastifiante de la composition varie de 5 à 25 pce.

Selon un mode de réalisation préférentiel de l'invention, la composition est obtenue à partir d'un premier mélange maître comprenant au moins l'élastomère diénique et le noir de carbone, et présentant une dispersion du noir de carbone dans la matrice élastomérique ayant une note Z supérieure ou égale à 80.

Selon une variante de réalisation de l'invention, le premier mélange maître est obtenu par mélangeage en phase liquide à partir d'un latex d'élastomère diénique et d'une dispersion aqueuse de noir de carbone.

En effet, il existe différentes méthodes pour obtenir un mélange maître d'élastomère diénique et de charge renforçante. En particulier un type de solution consiste, pour améliorer la dispersiblité de la charge dans la matrice

élastomérique, à procéder au mélange de l'élastomère et de la charge en phase « liquide ». Pour ce faire, on a fait appel à un élastomère sous forme de latex qui se présente sous forme de particules d'élastomère dispersées dans l'eau, et à une dispersion aqueuse de la charge, c'est-à-dire une charge dispersée dans de l'eau, couramment appelée « slurry ». Certains procédés en particulier, tels que ceux décrits dans le document US 6 048 923, permettent d'obtenir un mélange maître d'élastomère et de charge présentant une très bonne dispersion de la charge dans la matrice élastomérique, très améliorée par rapport à la dispersion de la charge dans la matrice élastomérique susceptible d'être obtenue lors du mélange en phase solide d'élastomère et de charge renforçante. Ce procédé consiste notamment à incorporer un flux continu d'un premier fluide constitué par un latex d'élastomère dans la zone de mélangeage d'un réacteur de coagulation, à incorporer un deuxième flux continu d'un deuxième fluide constitué par une dispersion aqueuse de charge sous pression dans la zone de mélangeage pour former un mélange avec le latex d'élastomère ; le mélangeage de ces deux fluides étant suffisamment énergétique pour permettre de coaguler quasiment complètement le latex d'élastomère avec la charge avant l'orifice de sortie du réacteur de coagulation puis à sécher le coagulum obtenu.

L'invention a également pour objet une composition à base d'au moins un élastomère diénique, une charge renforçante comprenant au moins du noir de carbone ayant une surface spécifique CTAB, mesurée selon la norme NF T 45-007 de novembre 1987 supérieure ou égale à 130 $m^2/g$, une huile plastifiante ainsi qu'un système de réticulation, obtenue à partir d'un premier mélange maître comprenant au moins l'élastomère diénique et le noir de carbone, et présentant une dispersion du noir de carbone dans la matrice élastomérique ayant une note Z, telle que définie en page 6, supérieure ou égale à 80 et dans laquelle le taux d'huile plastifiante de la composition varie de 2 à 50 parties pour cent parties en poids d'élastomère.

De préférence le taux d'huile plastifiante de la composition varie de 5 à 25 pce.

Selon un mode de réalisation préférentiel de l'invention, la composition est obtenue à partir d'un premier mélange maître comprenant au moins l'élastomère diénique et le noir de carbone, et présentant une dispersion du noir de carbone dans la matrice élastomérique ayant une note Z supérieure ou égale à 80.

Selon une variante de réalisation de l'invention, le premier mélange maître est obtenu par mélangeage en phase liquide à partir d'un latex d'élastomère diénique et d'une dispersion aqueuse de noir de carbone, de préférence identique au procédé en phase liquide détaillé précédemment.

L'invention concerne encore un procédé de préparation d'une composition comprenant au moins un élastomère diénique, une charge renforçante comprenant au moins du noir de carbone ayant une surface spécifique CTAB, mesurée selon la norme NF T 45-007 de novembre 1987 supérieure ou égale à 130 $m^2/g$, une huile plastifiante ainsi qu'un système de réticulation, et dans laquelle le taux d'huile plastifiante de la composition varie de 2 à 50 parties pour cent parties en poids d'élastomère qui comprend les étapes suivantes :

- préparation d'un premier mélange maître comprenant l'élastomère diénique et le noir de carbone, ce premier mélange maître présentant une dispersion de la charge dans la matrice élastomérique ayant une note Z, telle que définie en page 6, supérieur ou égale à 80,
- incorporation des autres constituantes de la composition, à l'exception du système de réticulation, au premier mélange maître dans un mélangeur en malaxant thermomécaniquement le tout jusqu'à atteindre une température maximale comprise entre 130°C et 200°C,
- refroidissement de l'ensemble à une température inférieure à 100°C,
- incorporation ensuite du système de réticulation;
- malaxage du tout jusqu'à une température maximale inférieure à 120°C.

De préférence, le mélange maître est réalisé en phase liquide à partir d'au moins un latex d'élastomère et d'une dispersion de noir de carbone, en particulier selon le précédé détaillé précédemment.

L'invention a enfin pour objet un article fini ou semi-fini, une bande de roulement de pneumatique, un pneumatique et un produit semi-fini comportant une composition telle que décrite précédemment.

On entend dans ce qui suit par « mélange maître » (couramment désigné par son nom anglais « masterbatch »): un composite à base d'élastomère dans lequel a été introduite une charge et éventuellement d'autres additifs.

## I. - MESURES ET TESTS

Les compositions de caoutchouc sont caractérisées, avant et après cuisson, comme indiqué ci-après.

### Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor (de petite taille) tourne au sein de

l'éprouvette à 2 tours/minute et on mesure le couple utile pour entretenir ce mouvement après 4 minutes de rotation. La plasticité Mooney (MS 1+4) est exprimée en "unité Mooney" (UM, avec 1 UM = 0,83 Newton.mètre).

Dispersion

D'une manière connue, la dispersion de charge dans une matrice élastomérique peut être représentée par la note Z, qui est mesurée, après réticulation, selon la méthode décrite par S. Otto et Al dans Kautschuk Gummi Kunststoffe, 58 Jahrgang, NR 7-8/2005, en accord avec la norme ISO 11345.

Le calcul de la note Z est basé sur le pourcentage de surface dans laquelle la charge n'est pas dispersée (« % surface non dispersée »), telle que mesurée par l'appareil « disperGRADER+ » fourni avec son mode opératoire et son logiciel d'exploitation « disperDATA » par la société Dynisco selon l'équation :

$$Z = 100 - (\%\ \text{surface non dispersée})/0.35$$

Le pourcentage de surface non dispersée est, quant à lui, mesuré grâce à une caméra observant la surface de l'échantillon sous une lumière incidente à 30°. Les points clairs sont associés à de la charge et à des agglomérats, tandis que les points foncés sont associés à la matrice de caoutchouc ; un traitement numérique transforme l'image en une image noir et blanche, et permet la détermination du pourcentage de surface non dispersée, telle que décrite par S.Otto dans le document précité.

Plus la note Z est haute, meilleure est la dispersion de la charge dans la matrice élastomérique (une note Z de 100 correspondant à une dispersion parfaite et une note Z de 0 à une dispersion médiocre). On considèrera qu'une note Z supérieure ou égale à 80 correspond à une surface présentant une très bonne dispersion de la charge dans la matrice élastomérique.

Essais de traction

Ces essais de traction permettent de déterminer les contraintes d'élasticité et les propriétés à la rupture. Sauf indication différente, ils sont effectués conformément à la norme française NF T 46-002 de septembre 1988. On mesure en première élongation (i.e., après un cycle d'accommodation au taux d'extension prévu pour la mesure elle-même) le module sécant nominal (ou contrainte apparente, en MPa) à 100% d'allongement (notés MA100). Les mesures de traction pour déterminer les modules accomodés sécants sont effectuées à la température de 23°C +/-2°C, et dans les conditions normales d'hygrométrie (50 +/- 5% d'humidité relative).

Les contraintes à la rupture (en MPa) et les allongements à la rupture (en %) sont également mesurés. Toutes ces mesures de traction sont effectuées à la température de 60°C ± 2°C, et dans les conditions normales d'hygrométrie (50 ± 5% d'humidité relative), selon la norme française NF T 40-101 (décembre 1979).

Propriétés dynamiques

Les propriétés dynamiques et notamment $\tan(\delta)_{max}$, représentative de l'hystérèse, sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, dans les conditions normales de température (23°C) selon la norme ASTM D 1349-99, ou selon les cas à une température différente, en particulier dans les exemples cités, la température de mesure est de 60°C. On effectue un balayage en amplitude de déformation de 0,1% à 50% crête-crête (cycle aller), puis de 50% à 0,1% crête-crête (cycle retour). Les résultats exploités sont le module complexe de cisaillement dynamique (G*) et le facteur de perte $\tan(\delta)$. Pour le cycle retour, on indique la valeur maximale de $\tan(\delta)$ observée, noté $\tan(\delta)_{max}$,.

## II. DESCRIPTION DETAILLEE DE L'INVENTION

L'invention concerne une composition à base d'au moins un élastomère diénique, une charge renforçante comprenant au moins du noir de carbone ayant une surface spécifique CTAB, mesurée selon la norme NF T 45-007 de novembre 1987, supérieure ou égale à 130 $m^2/g$, une huile plastifiante ainsi qu'un système de réticulation, la dispersion de la charge dans la matrice élastomérique ayant une note Z, telle que définie en page 6, supérieure ou égale à 70 et dans laquelle le taux d'huile plastifiante de la composition varie de 2 à 50 parties pour cent parties en poids d'élastomère.

Selon un mode de réalisation de l'invention, cette composition est obtenue à partir d'un premier mélange maître comprenant au moins l'élastomère diénique et le noir de carbone, et présentant une dispersion du noir de 80.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

II-1) Elastomère diénique

De façon usuelle, on utilise indifféremment dans le texte les termes « élastomère » et « caoutchouc » qui sont interchangeables.

La composition conforme à l'invention comprend au moins un premier élastomère diénique et éventuellement un deuxième élastomère identique ou différent du premier, qui peut donc être ou pas un élastomère diénique.

Par élastomère ou caoutchouc "diénique", doit être compris de manière connue un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Parmi ces élastomères diéniques, on distingue par ailleurs le caoutchouc naturel et les élastomères synthétiques.

Par élastomères diéniques synthétiques susceptible d'être utilisé conformément à l'invention, on entend plus particulièrement par élastomère diénique:

(a) - tout homopolymère obtenu par polymérisation d'un monomère diène conjugué ayant de 4 à 12 atomes de carbone;

(b) - tout copolymère obtenu par copolymérisation d'un ou plusieurs diènes conjugués entre eux ou avec un ou plusieurs composés vinyle aromatique ayant de 8 à 20 atomes de carbone;

(c) - un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d) - un copolymère d'isobutène et d'isoprène (caoutchouc butyle), ainsi que les versions halogénées, en particulier chlorées ou bromées, de ce type de copolymère.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique telle que silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752). Comme autres exemples

d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 5 C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités-1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 5°C et - 70°C.

En résumé, le ou les élastomères diéniques synthétiques selon l'invention sont choisis préférentiellement dans le groupe des élastomères diéniques fortement insaturés constitué par les polybutadiènes (en abrégé "BR"), les polyisoprènes (IR) de synthèse, les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Comme il a été précisé plus haut, les procédés de mélangeage en phase liquide sont préférentiellement utilisés pour permettre d'obtenir des mélanges maîtres à base d'élastomère diénique et de noir de carbone présentant une très bonne dispersion du noir de carbone dans l'élastomère. Ainsi notamment pour la réalisation du premier mélange maître d'élastomère diénique et de noir de carbone, on utilisera plus particulièrement un latex d'élastomère diénique, le latex d'élastomère étant une forme particulière de l'élastomère qui se présente sous forme de particules d'élastomère dispersées dans l'eau.

L'invention concerne donc préférentiellement les latex d'élastomères diéniques, les élastomères diéniques étant ceux définis précédemment.

Plus particulièrement, pour le caoutchouc naturel (NR) qui convient particulièrement à l'invention, ce caoutchouc naturel existe sous différentes formes comme le détail le chapitre 3 «Latex concentrates : properties and composition », de K.F. Gaseley, A.D.T. Gordon et T.D. Pendle dans « Naturel Rubber Science and Technology », A.D. Roberts, Oxford University Press - 1988.

En particulier plusieurs formes de latex de caoutchouc naturel sont commercialisés : les latex de caoutchouc naturel dits « de champ » (« field latex »), les latex de caoutchouc naturel dits « concentrés » (« concentrated natural rubber latex »), les latex epoxydés (« ENR »), les latex déprotéinisés ou encore les latex prévulcanisés. Le latex de caoutchouc naturel de champ est un latex dans lequel de l'ammoniac a été ajouté pour éviter une coagulation précoce et le latex de caoutchouc naturel concentré correspond à un latex de champ qui a subi un traitement correspondant à un lavage suivi d'une nouvelle concentration. Les différentes catégories de latex de caoutchouc naturel concentrés sont répertoriées notamment selon la norme ASTM D 1076-06. Parmi ces latex de caoutchouc naturel concentrés, on distingue notamment des latex de caoutchouc naturel concentrés de qualité dite: « HA » (high ammonia) et de qualité dite « LA » ; on utilisera avantageusement pour l'invention des latex de caoutchouc naturel concentrés de qualité HA.

Le latex de NR peut être préalablement modifié physiquement ou chimiquement (centrifugation, traitement enzymatique, modifiant chimique...)

Le latex peut être utilisé directement ou être préalablement dilué dans de l'eau pour faciliter sa mise en œuvre.

Ainsi à titre de latex d'élastomère synthétique, le latex peut notamment consister en un élastomère diénique synthétique déjà disponible sous forme d'émulsion (par exemple un copolymère de butadiène et de styrène, SBR, préparé en émulsion), ou en un élastomère diénique synthétique initialement en solution (par exemple un SBR préparé en solution) qui est émulsifié dans un mélange de solvant organique et d'eau, généralement au moyen d'un agent tensio-actif.

Convient particulièrement à l'invention un latex de SBR, notamment un SBR préparé en émulsion ("ESBR") ou un SBR préparé en solution ("SSBR"), et plus particulièrement un SBR préparé en émulsion.

Il existe deux grands types de procédés de copolymerisation en émulsion du styrène et de butadiène, l'un d'entre eux, ou procédé à chaud (mis en oeuvre à une température proche de 50° C), étant adapté pour la préparation de SBR très ramifiés alors que l'autre, ou procédé à froid (mis en oeuvre à une température pouvant aller de 15° C à 40° C), permet d'obtenir des SBR plus linéaires.

Pour une description détaillée de l'efficacité de plusieurs émulsifiants utilisables dans ledit procédé à chaud (en fonction des taux desdits émulsifiants), on pourra par exemple se reporter aux deux articles de C. W. Carr, 1. M. Kolthoff, E. J. Meehan, University of Minesota, Minneapolis, Minesota qui ont paru dans Journal of Polymer Science de 1950, Vol. V, n °2, pp. 201-206, et de 1951, Vol. VI, n° 1, pp. 73-81.

Concernant des exemples comparatifs de mise en oeuvre dudit procédé à froid, on pourra par exemple se reporter à l'article ½ Industrial and Engineering Chemistry, 1948, Vol. 40, n° 5, pp. 932-937, E. J. Vandenberg, G. E. Hulse, Hercules Powder Company, Wilmington, Delaware + et a l'article ½ Industrial and Engineering Chemistry, 1954, Vol. 46, n° 5, pp. 1065-1073, J. R. Miller, H. E. Diem, B. F. Goodrich Chemical Co. , Akron, Ohio +.

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

On notera que l'on peut envisager d'utiliser un ou plusieurs latex de caoutchouc naturel en coupage, un ou plusieurs latex de caoutchouc synthétique en coupage ou un coupage un ou plusieurs latex de caoutchouc naturel avec un ou plusieurs latex de caoutchouc synthétique.

Au titre du deuxième élastomère de la composition, le cas échéant, lorsqu'il ne s'agit pas d'élastomère diénique, conviennent particulièrement des élastomères butyl non diéniques tels que des homopolymères de poly(isobutylène) ou des copolymères à base de poly(isobutylène) (bien entendu s'il s'agit de copolymères avec de l'isoprène, on retrouve les élastomères diéniques décrits précédemment), ainsi que les dérivés halogénés, en particulier généralement bromés ou chlorés, de ces homopolymères de poly(isobutylène) et copolymères à base de poly(isobutylène).

Conviennent également parmi les élastomères non diéniques, des copolymères d'isobutylène et de dérivés de styrène tels que les copolymères d'isobutylène et méthylstyrène bromé (BIMS) dont fait notamment partie l'élastomère nommé EXXPRO commercialisé par la société Exxon.

On peut également citer à titre d'élastomère non diénique convenant particulièrement pour l'invention, les élastomères thermoplastiques (TPE) non diéniques.

Avantageusement la fraction pondérale du premier élastomère diénique dans la matrice élastomérique est supérieure ou égale à 50% et de préférence supérieure ou égale à 60%.

II-2) Charges

On utilise à titre de charge renforçante une charge organique constituée par du noir de carbone. Comme noirs de carbone conviennent tous les noirs de carbone renforçants ayant une surface spécifique CTAB supérieure ou égale à 130 $m^2/g$, et plus particulièrement encore les noirs de carbone ayant une surface STAB supérieure ou égale à 160 $m^2/g$.

Précisons que la surface spécifique CTAB est déterminée selon la norme française NF T 45-007 de novembre 1987 (méthode B).

A ce noir de carbone, peut être associé en coupage une ou des autres charges organiques, tel que par exemple des charges organiques de polyvinylaromatique fonctionnalisé telles que décrites dans les demandes WO-A-2006/069792 et WO-A-2006/069793, et/ou une ou plusieurs charges inorganiques renforçantes telle que de la silice.

Ainsi par "charge inorganique", doit être entendu ici, de manière connue, toute charge inorganique ou minérale, quelles que soient sa couleur et son origine (naturelle ou de synthèse), encore appelée charge "blanche", charge "claire" ou encore charge "non-noire" ("*non-black filler*") par opposition au noir de carbone, cette charge inorganique étant capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique pour bande de roulement. Une telle charge se caractérise généralement par la présence de groupes fonctionnels, notamment hydroxyle (-OH), à sa surface, nécessitant pour être utilisée à titre de charge renforçante l'emploi d'un agent ou système de couplage destiné à assurer une liaison chimique stable entre l'élastomère isoprénique et ladite charge.

Une telle charge inorganique peut donc être utilisée avec un agent de couplage pour permettre le renforcement de la composition de caoutchouc dans laquelle elle est comprise. Elle peut également être utilisée avec un agent de recouvrement (qui n'assure pas de liaison entre la charge et la matrice élastomérique) en complément d'un agent de couplage ou non (dans ce cas la charge inorganique ne joue pas de rôle de renforcement).

L'état physique sous lequel se présente la charge inorganique est indifférent, que ce soit sous forme de poudre, de microperles, de granulés, de billes ou toute autre forme densifiée appropriée. Bien entendu on entend également par charge inorganique des mélanges de différentes charges inorganiques, en particulier de charges siliceuses et/ou alumineuses hautement dispersibles telles que décrites ci-après.

Comme charges inorganiques conviennent notamment des charges minérales du type siliceuse, en particulier de la silice ($SiO_2$), ou du type alumineuse, en particulier de l'alumine ($Al_2O_3$). La silice utilisée peut être toute silice connue

de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. A titres de silices précipitées hautement dispersibles (dites "HDS"), on citera par exemple les silices « Ultrasil 7000 » et « Ultrasil 7005 » de la société Evonik, les silices « Zeosil 1165MP, 1135MP et 1115MP » de la société Rhodia, la silice « Hi-Sil EZ150G » de la société PPG, les silices « Zeopol 8715, 8745 et 8755 » de la Société Huber, les silices à haute surface spécifique telles que décrites dans la demande WO 03/16837.

On peut également envisager l'ajout au noir de carbone, de charge telles que des noirs de carbone partiellement ou intégralement recouverts de silice par un post traitement, ou les noirs de carbone modifiés in situ par de la silice tels que, à titre non limitatif, les charges qui commercialisées par la société Cabot Corporation sous la dénomination Ecoblack™ « CRX 2000 » ou « CRX4000 ».

De manière préférentielle, le taux de charge totale (noir de carbone et charge inorganique telle que silice) est compris entre 20 et 200 pce, plus préférentiellement entre 30 et 150 pce et encore plus préférentiellement entre 30 et 100 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise du noir de carbone dont le taux varie de 20 à 80 pce et on peut l'associer de préférence à une charge inorganique, en particulier de la silice, dont le taux varie de 5 à 50 pce, plus particulièrement la charge totale de la composition comprenant du noir de carbone dont le taux varie de 35 à 70 pce et une charge inorganique, en particulier de la silice, dont le taux varie de 5 à 35 pce, de façon encore plus préférentielle la charge totale comprenant du noir de carbone dont le taux varie de 40 à 65 pce et une charge inorganique, en particulier de la silice, dont le taux varie de 10 à 30 pce.

II-3) - Huile plastifiante

Les compositions de caoutchouc de l'invention utilisent une huile d'extension (ou huile plastifiante) dont la fonction habituelle est de faciliter la mise en œuvre, par un abaissement de la plasticité Mooney et d'améliorer l'endurance par une diminution des modules d'allongement à cuit.

A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofurane à une concentration d'environ 1 g/l ; puis la solution est filtrée sur filtre de porosité 0,45 µm avant injection. L'appareillage est la chaîne chromatographique « WATERS alliance ». Le solvant d'élution est le tétrahydrofurane, le débit de 1 ml/min, la température du système de 35°C et la durée d'analyse de 30 min. On utilise un jeu de deux colonnes « WATERS » de dénomination « STYRAGEL HT6E ». Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité de plastifiant en fonction notamment de l'objet pneumatique dans lequel elle est destinée à être utilisée.

Le taux d'huile plastifiante est préférentiellement compris entre 2 et 35 pce. En dessous du minimum indiqué, l'effet technique visé peut s'avérer insuffisant, alors qu'au-delà du maximum le pouvoir collant des compositions à l'état cru, sur les outils de mélangeage, peut dans certains cas devenir rédhibitoire du point de vue industriel. Le taux d'huile plastifiante est encore plus préférentiellement compris entre 5 et 25 pce.

II-4) Mélanges maîtres - Composition de caoutchouc

Avantageusement les mélanges maîtres et les compositions ainsi réalisés sont susceptibles d'être utilisés dans

les applications pour pneumatique.

Les compositions de caoutchouc pour pneumatique à base des mélanges maîtres et de charge inorganique selon l'invention, peuvent comporter également de façon connue un agent de couplage et/ou un agent de recouvrement et un système de vulcanisation.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) $$Z - A - S_x - A - Z ,$$

dans laquelle:

- x est un entier de 2 à 8 (de préférence de 2 à 5) ;
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$, en particulier le propylène) ;
- Z répond à l'une des formules ci-après:

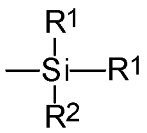 ; 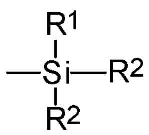 ; 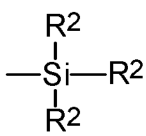 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane ($R^2$ = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'agent de recouvrement, on considérera généralement des agents d'aide à la mise en œuvre susceptibles de manière connue, grâce à une amélioration de la dispersion de la charge inorganique dans la matrice de caoutchouc et à un abaissement de la viscosité des compositions, d'améliorer leur faculté de mise en œuvre à l'état

cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des $\alpha,\omega$-dihydroxy-polyorganosiloxanes (notamment des $\alpha,\omega$-dihydroxy-polydiméthylsiloxanes), des acides gras comme par exemple l'acide stéarique.

Dans les compositions de caoutchouc conformes à l'invention, la teneur en agent de couplage est préférentiellement comprise entre 0,1 et 12 % massique de la charge inorganique pour une surface de CTAB de $160m^2/g$ plus préférentiellement entre 4 et 10 % massique de la charge inorganique pour une surface de CTAB de $160m^2/g$ ; et/ou la teneur en agent de recouvrement est préférentiellement comprise 0,1 et 20 % massique de la charge inorganique pour une surface de CTAB de $160m^2/g$ plus préférentiellement entre 5 et 20 % massique de la charge inorganique pour une surface de CTAB de $160m^2/g$. La teneur en agent de couplage pouvant être ajustée au niveau de surface spécifique de la charge.

L'homme du métier comprendra qu'à titre de charge équivalente de la charge inorganique décrite dans le présent paragraphe, pourrait être utilisée une charge d'une autre nature, notamment organique, dès lors que cette charge serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Ces compositions de caoutchouc conformes à l'invention peuvent comporter également tout ou partie des additifs usuels habituellement utilisés dans les compositions d'élastomères destinées à la fabrication de pneumatiques, en particulier de bandes de roulement, comme par exemple d'autres plastifiants, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation.

On notera que l'on peut également envisager de réaliser les mélanges maîtres conformes à l'invention en y incorporant, notamment avant la phase de séchage de la réalisation du mélange maître en phase liquide, des additifs tels que décrits précédemment, anti-oxydant, agent de couplage, agent de recouvrement...

II-5). Fabrication des compositions de caoutchouc et des mélanges maîtres

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel l'invention, tous les constituants de base des compositions de l'invention, à l'exception du système de vulcanisation, sont incorporés de manière intime, par malaxage, au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

Selon un mode de réalisation préférentiel de l'invention, la huile plastifiante ainsi que les constituants de base des compositions de l'invention, à l'exception du système de vulcanisation, en particulier le cas échant, la charge inorganique telle que la silice, est incorporée à l'élastomère diénique et au noir de carbone qui ont été préalablement préparés sous forme d'un premier mélange maître.

Préférentiellement ce premier mélange maître est réalisé en phase « liquide ». Pour ce faire, on a fait appel à l'élastomère diénique sous forme de latex qui se présente sous forme de particules d'élastomère dispersées dans l'eau, et à une dispersion aqueuse du noir de carbone car, c'est-à-dire une charge dispersée dans de l'eau, couramment appelée « slurry ». Plus préférentiellement encore on suivra les étapes de procédé décrites dans le document US 6 048 923, qui consiste notamment à incorporer un flux continu d'un premier fluide constitué par le latex d'élastomère dans la zone de mélangeage d'un réacteur de coagulation, à incorporer un deuxième flux continu d'un deuxième fluide constitué par la dispersion aqueuse de noir de carbone sous pression dans la zone de mélangeage pour former un mélange avec le latex d'élastomère ; le mélangeage de ces deux fluides étant suffisamment énergétique pour permettre de coaguler quasiment complètement le latex d'élastomère avec le noir de carbone avant l'orifice de sortie du réacteur de coagulation puis à sécher le coagulum obtenu.

Selon un autre mode de réalisation préférentiel de l'invention, la charge inorganique et le deuxième élastomère sont incorporés au premier mélange maître en se présentant également sous forme d'un deuxième mélange maître qui aura été préalablement préparé. Ce deuxième mélange maître peut être préparé en particulier sous forme solide par malaxage thermomécanique du deuxième élastomère et de la charge inorganique ; il peut également être préparé par tout

autre procédé et notamment il peut être également préparé en phase liquide.

On notera en particulier que dans le cas de l'incorporation d'un deuxième élastomère et/ou d'une charge inorganique, cette ou ces incorporations peuvent être réalisées simultanément à l'introduction dans le mélangeur des autres constituants (notamment le premier élastomère diénique ou premier mélange maître) mais également avantageusement que cette ou ces incorporations peut être décalées dans le temps de quelques dizaines de secondes à quelques minutes. On notera que dans le cas d'un ajout d'une charge inorganique et d'un deuxième élastomère, ceux-ci peuvent être introduits séparément ou sous la forme d'un deuxième mélange maître contenant le deuxième élastomère et la charge inorganique. Dans le cas de l'introduction du deuxième élastomère seul et de la charge inorganique seule, décalée dans le temps de quelques dizaines de secondes à quelques minutes, la charge inorganique peut être introduite avant, après ou simultanément au deuxième élastomère.

A titre d'exemple, la première phase (non-productive) est conduite en une seule étape thermomécanique au cours de laquelle on introduit, dans un mélangeur approprié tel qu'un mélangeur interne usuel, tous les constituants nécessaires (sous forme le cas échéant de mélange maître comme on l'a précisé précédemment), les éventuels agents de recouvrement ou de mise en œuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule de tourisme, poids-lourds etc.

## III EXEMPLES DE REALISATION DE L'INVENTION

Les exemples illustrent amélioration des propriétés en terme de processabilité et de propriétés à la rupture de compositions de caoutchouc conformes à l'invention par rapport à des composition de caoutchouc témoins se distinguant des compositions de l'invention soit par la surface spécifique CTAB du noir de carbone, soit par l'absence d'huile plastifiante, soit enfin par la mauvaise dispersion (note Z) du noir de carbone dans la composition.

Les compositions de caoutchouc qui suivent ont été préparées pour certaines à partir d'un mélange maître réalisée en phase liquide de caoutchouc naturel et de noir de carbone et pour d'autres par un mélangeage en phase solide.

### III.1 Préparation de mélange- maître de caoutchouc naturel et de noir de carbone

Les mélanges maîtres d'élastomère diénique et de noir de carbone utilisés dans certaines des compositions qui suivent, sont réalisés en phase liquide selon le procédé décrit dans le brevet U.S. Patent No 6,048,923.

Ainsi on prépare selon le protocole détaillé dans le brevet précité, des mélanges maîtres à partir respectivement de noir de carbone N234 et de noir de carbone N134 commercialisé par la société Cabot Corporation, et de latex de caoutchouc naturel de champs (« field latex ») en provenance de Malaisie présentant un extrait sec de caoutchouc de 28% et un taux d'ammoniac de 0,3%. On obtient ainsi des mélanges maîtres A de caoutchouc naturel et de noir de carbone (avec le noir de carbone N234 ou le noir de carbone N134) dans lesquels le taux de noir de carbone est de 50 pce.

III-2 Préparation des compositions de caoutchouc

Les compositions témoins TM sont réalisés selon un procédé classique de mélangeage sous forme solide dans lequel l'élastomère donc du caoutchouc naturel dans ces exemples et la charge renforçante, respectivement selon les compositions : noir de carbone N234 et noir de carbone N134 commercialisés par la société Cabot Corporation.

Les compositions de caoutchouc témoins CA sont réalisées à partir du mélange maître A (incluant du noir de carbone N234 ou du noir de carbone N134).

Les différentes compositions sont réalisés de la manière suivante :'

On procède pour les essais qui suivent de la manière suivante: on introduit dans un mélangeur interne, rempli à 70% et dont la température initiale de cuve est d'environ 90°C, le caoutchouc naturel sous forme solide et le noir de carbone pour les compositions TM ou le mélange maître A pour les compositions CA, les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C.

On récupère le mélange ainsi obtenu, on le refroidit puis on ajoute le système de vulcanisation (soufre et accélérateur sulfénamide) sur un mélangeur externe (homo-finisseur) à 70°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

III-3 Essais

La composition de caoutchouc TM1 est préparée « en masse » à partir de caoutchouc naturel et de noir de carbone sous forme solide comme détaillé dans le paragraphe III-2, les compositions CA1 et CA2 non-conformes à l'invention et les compositions CA3 et CA4 conformes à l'invention sont préparées à partir des mélanges maîtres A selon le procédé détaillé dans paragraphe III-2.

L'ensemble des compositions quel que soit le procédé de fabrication présente la formulation de base suivante (en pce)

| | | |
|---|---|---|
| - | - caoutchouc naturel | 100 |
| - | - 6PPD (a) | 1,5 |
| - | - Acide stéarique | 2 |
| - | - Oxyde de zinc (c) | 3 |
| - | - accélérateur(d) | 1,4 |
| - | -soufre | 1,4 |

(a) N-1,3-diméthylbutyl-N-phényl-para-phénylènediamine ("Santoflex 6-PPD" de la société Flexsys) ;
(c) oxyde de zinc (grade industriel - société Umicore
(d) N-cyclohexyl-2-benzothiazyl-sulfénamide ("Santocure CBS" de la société Flexsys).

En plus de ces constituants, les compositions TM et CA se distinguent les unes des autres par leur note Z, la nature du noir de carbone et la nature et la présence d'huile plastifiante, comme détaillé dans le tableau 1 qui suit.

Tableau 1

| **Compositions** | **TM1** | **CA1** | **CA2** | **CA3** | **CA4** |
|---|---|---|---|---|---|
| Noir de carbone (1) | - | 50 | - | - | - |
| Noir de carbone (2) | 50 | - | 50 | 50 | 50 |
| Huile (3) | 10 | 10 | - | 10 | - |
| Huile (4) | - | - | - | - | 10 |

(suite)

| Compositions | TM1 | CA1 | CA2 | CA3 | CA4 |
|---|---|---|---|---|---|
| Note Z | 50 | 88 | 86 | 78 | 87 |

(1) N234 commercialisé par la société Cabot Corporation (CTAB 115m$^2$/g )
(2) N134 commercialisé par la société Cabot Corporation (CTAB 135m$^2$/g )
(3) Huile « Extensoil1721 » commercialisé par la société REPSOL
(4) Huile « MES-H » commercialisé par la société REPSOL

Les propriétés mesurées avant et après cuisson à 150°C pendant 40 minutes sont données dans le tableau 2 qui suit.

Tableau 2

| Compositions | TM1 | CA1 | CA2 | CA3 | CA4 |
|---|---|---|---|---|---|
| Propriétés avant cuisson | | | | | |
| Mooney | 87 | 58 | 71 | 56 | 54 |
| Propriétés après cuisson | | | | | |
| Contrainte rupture à 60°C (MPa) | 53 | 51 | 50 | 59 | 66 |
| Allongement rupture à 60°C (%) | 265 | 233 | 183 | 230 | 241 |
| Energie rupture | 140 | 118 | 91.5 | 136 | 160 |
| $\tan(\delta)_{max}$ | 0,12 | 0,11 | 0,12 | 0,10 | 0,10 |

On constate que les compositions conformes à l'invention CA3 et CA4 présentant une note Z élevée (supérieure ou égale à 70), ainsi qu'un noir ayant une CTAB supérieure ou égale à 130m2/g et une huile plastifiante conforme à l'invention (avec une nature différente d'huile) permettent de façon surprenante d'améliorer notablement la processabilité de la composition (valeur de Mooney plus faible) par rapport à une composition témoin TM1 sans dégrader les propriétés à la rupture (contrainte, allongement, énergie), voire en les améliorant (composition CA4); contrairement à la composition CA1 (comportant un noir de carbone de surface spécifique CTAB inférieur à 130m2/g) qui améliore la processabilité mais dégrade les propriétés à la rupture et contrairement à la composition CA2 qui a des propriétés à la rupture dégradées et une processabilité inférieure (équivalente à TM1).

Ainsi on observe que c'est ce compromis spécifique de dispersion de la charge dans la matrice élastomérique, de nature de la charge et de présence d'huile plastifiante qui permet de façon surprenante de réaliser une amélioration de la processabilité de la composition sans dégrader les autres propriétés du mélange.

## Revendications

1. Composition de caoutchouc à base d'au moins un élastomère diénique, une charge renforçante comprenant au moins du noir de carbone ayant une surface spécifique CTAB, mesurée selon la norme NF T 45-007 de novembre 1987, supérieure ou égale à 130 m$^2$/g, une huile plastifiante ainsi qu'un système de réticulation, la dispersion de la charge dans la matrice élastomérique ayant une note Z, telle que définie en page 6, supérieure ou égale à 70 et dans laquelle le taux d'huile plastifiante varie de 2 à 50 parties pour cent parties en poids d'élastomère.

2. Composition selon la revendication 1, obtenue à partir d'un premier mélange maître comprenant au moins l'élastomère diénique et le noir de carbone, et présentant une dispersion du noir de carbone dans la matrice élastomérique ayant une note Z supérieure ou égale à 80.

3. Composition à base d'au moins un élastomère diénique, une charge renforçante comprenant au moins du noir de carbone ayant une surface spécifique CTAB, mesurée selon la norme NF T 45-007 de novembre 1987, supérieure ou égale à 130 m$^2$/g, une huile plastifiante ainsi qu'un système de réticulation, obtenue à partir d'un premier mélange maître comprenant au moins l'élastomère diénique et le noir de carbone, et présentant une dispersion du noir de carbone dans la matrice élastomérique ayant une note Z, telle que définie en page 6, supérieure ou égale à 80 et laquelle le taux d'huile plastifiante varie de 2 à 50 parties pour cent parties en poids d'élastomère.

**4.** Composition selon l'une quelconque des revendications 1 à 3, dans laquelle le taux d'huile plastifiante varie de 5 à 25 parties pour cent parties en poids d'élastomère.

**5.** Composition selon l'une quelconque des revendications 1 à 4, dans laquelle le premier mélange maître est obtenu par mélangeage en phase liquide à partir d'un latex d'élastomère diénique et d'une dispersion aqueuse de noir de carbone.

**6.** Composition selon la revendication 5, dans laquelle le premier mélange maître est obtenu selon les étapes de procédé suivantes :

- alimenter un flux continu d'un latex d'élastomère diénique jusqu'à une zone de mélange d'un réacteur de coagulation définissant une zone allongée de coagulation s'étendant entre la zone de mélange et une sortie,
- alimenter un flux continu d'un fluide comprenant une charge sous pression dans la zone de mélange d'un réacteur de coagulation pour former un mélange coagulé,
- sécher le coagulum obtenu précédemment afin de récupérer le premier mélange maître.

**7.** Composition selon l'une quelconque des revendications 1 à 6, dans laquelle l'élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères.

**8.** Compositions selon la revendication 7, dans laquelle l'élastomère diénique est un caoutchouc naturel.

**9.** Composition selon l'une quelconque des revendications précédentes, qui comprend au moins une charge inorganique, de préférence de la silice, et/ou au moins un deuxième élastomère identique ou différent du premier élastomère.

**10.** Composition selon la revendication 9, dans laquelle est ajouté au premier mélange maître une charge inorganique, de préférence de la silice, et dans laquelle le taux de noir de carbone varie de 20 à 80, de préférence de 40 à 65, le taux de charge inorganique variant de 5 à 50 pce, de préférence de 10 à 30 pce.

**11.** Procédé de préparation d'une composition comprenant au moins un élastomère diénique, une charge renforçante comprenant au moins du noir de carbone ayant une surface spécifique CTAB, mesurée selon la norme NF T 45-007 de novembre 1987, supérieure ou égale à 130 $m^2/g$, une huile plastifiante ainsi qu'un système de réticulation et dans laquelle le taux d'huile plastifiante varie de 2 à 50 parties pour cent parties en poids d'élastomère, qui comprend les étapes suivantes :

- préparation d'un premier mélange maître comprenant l'élastomère diénique et le noir de carbone, ce premier mélange maître présentant une dispersion de la charge dans la matrice élastomérique ayant une note Z, telle que définie en page 6, supérieur ou égale à 80,
- incorporation des autres constituantes de la composition, à l'exception du système de réticulation, au premier mélange maître dans un mélangeur en malaxant thermomécaniquement le tout jusqu'à atteindre une température maximale comprise entre 130°C et 200°C,
- refroidissement de l'ensemble à une température inférieure à 100°C,
- incorporation ensuite du système de réticulation;
- malaxage du tout jusqu'à une température maximale inférieure à 120°C.

**12.** Procédé selon la revendication 11, dans lequel le mélange maître est réalisé en phase liquide à partir d'au moins un latex d'élastomère et d'une dispersion de noir de carbone.

**13.** Procédé selon la revendication 12, dans lequel le mélange maître est réalisé selon les étapes successives suivantes :

- alimenter un flux continu d'un latex d'élastomère diénique jusqu'à une zone de mélange d'un réacteur de coagulation définissant une zone allongée de coagulation s'étendant entre la zone de mélange et un orifice de sortie,
- alimenter un flux continu d'un fluide comprenant une charge sous pression dans la zone de mélange d'un réacteur de coagulation pour former un mélange coagulé,
- sécher le coagulum obtenu précédemment afin de récupérer le premier mélange maître.

**14.** Pneumatique ou produit semi-fini comportant au moins une composition selon l'une quelconque des revendications 1 à 10.

## Patentansprüche

**1.** Kautschukzusammensetzung auf der Basis von mindestens einem Dien-Elastomer, einem verstärkenden Füllstoff, der mindestens Ruß mit einer gemäß der Norm NF T 45-007 von November 1987 gemessenen spezifischen CTAB-Oberfläche größer als oder gleich 130 $m^2/g$ umfasst, einem Weichmacheröl sowie einem Vernetzungssystem, wobei die Dispersion des Füllstoffs in der Elastomer-Matrix einen Z-Wert, wie auf Seite 6 definiert, größer als oder gleich 70 besitzt und in der der Anteil an Weichmacheröl von 2 bis 50 Gewichtsteilen pro hundert Gewichtsteilen Elastomer variiert.

**2.** Zusammensetzung nach Anspruch 1, die ausgehend von einer ersten Vormischung erhalten wird, die mindestens das Dien-Elastomer und den Ruß umfasst und die eine Dispersion des Rußes in der Elastomer-Matrix mit einem Z-Wert größer als oder gleich 80 aufweist.

**3.** Zusammensetzung auf der Basis von mindestens einem Dien-Elastomer, einem verstärkenden Füllstoff, der mindestens Ruß mit einer gemäß der Norm NF T 45-007 von November 1987 gemessenen spezifischen CTAB-Oberfläche größer als oder gleich 130 $m^2/g$ umfasst, einem Weichmacheröl sowie einem Vernetzungssystem, die ausgehend von einer ersten Vormischung erhalten wird, die mindestens das Dien-Elastomer und den Ruß umfasst und die eine Dispersion des Rußes in der Elastomer-Matrix mit einem Z-Wert, wie auf Seite 6 definiert, größer als oder gleich 80 aufweist und in der der Anteil an Weichmacheröl von 2 bis 50 Gewichtsteilen pro hundert Gewichtsteilen Elastomer variiert.

**4.** Zusammensetzung nach einem der Ansprüche 1 bis 3, wobei der Anteil an Weichmacheröl von 5 bis 25 Gewichtsteilen pro hundert Gewichtsteilen Elastomer variiert.

**5.** Zusammensetzung nach einem der Ansprüche 1 bis 4, wobei die erste Vormischung durch Flüssigphasenmischung aus einem Dien-Elastomer-Latex und einer wässrigen Dispersion von Ruß erhalten wird.

**6.** Zusammensetzung nach Anspruch 5, wobei die erste Vormischung gemäß den folgenden Verfahrensschritten erhalten wird:

- Zuführen eines kontinuierlichen Stroms eines Dien-Elastomer-Latex zu einer Mischzone eines Koagulationsreaktors, der eine längliche Koagulationszone bildet, die sich zwischen der Mischzone und einem Auslass erstreckt,
- Zuführen eines kontinuierlichen Stroms eines Fluids, das einen Füllstoff umfasst, unter Druck in die Mischzone eines Koagulationsreaktors, so dass ein koaguliertes Gemisch hergestellt wird,
- Trocknen des vorstehend erhaltenen Koagulums, um die erste Vormischung zu gewinnen.

**7.** Zusammensetzung nach einem der Ansprüche 1 bis 6, wobei das Dien-Elastomer aus der Gruppe ausgewählt ist, die aus Polybutadienen, Naturkautschuk, synthetischen Polyisoprenen, Butadien-Copolymeren, Isopren-Copolymeren und den Gemischen dieser Elastomere besteht.

**8.** Zusammensetzungen nach Anspruch 7, wobei das Dien-Elastomer ein Naturkautschuk ist.

**9.** Zusammensetzung nach einem der vorhergehenden Ansprüche, die mindestens einen anorganischen Füllstoff, vorzugsweise Siliziumdioxid, und/oder mindestens ein zweites Elastomer, das mit dem ersten Elastomer identisch oder davon verschieden ist, umfasst.

**10.** Zusammensetzung nach Anspruch 9, wobei zu der ersten Vormischung ein anorganischer Füllstoff, vorzugsweise Siliziumdioxid, hinzugefügt wird und wobei der Anteil an Ruß von 20 bis 80, vorzugsweise von 40 bis 65 variiert, wobei der Anteil an anorganischem Füllstoff von 5 bis 50 phr, vorzugsweise von 10 bis 30 phr variiert.

**11.** Verfahren zur Herstellung einer Zusammensetzung, die mindestens ein Dien-Elastomer, einen verstärkenden Füllstoff, der mindestens Ruß mit einer gemäß der Norm NF T 45-007 von November 1987 gemessenen spezifischen CTAB-Oberfläche größer als oder gleich 130 $m^2/g$ umfasst, ein Weichmacheröl sowie ein Vernetzungssystem

umfasst und in der der Anteil an Weichmacheröl von 2 bis 50 Gewichtsteilen pro hundert Gewichtsteilen Elastomer, variiert, das die folgenden Schritte umfasst:

- Herstellen einer ersten Vormischung, die das Dien-Elastomer und den Ruß umfasst, wobei die erste Vormischung eine Dispersion des Füllstoffs in der Elastomer-Matrix mit einem Z-Wert, wie auf Seite 6 definiert, größer als oder gleich 80 aufweist,
- Einbringen der anderen Bestandteile der Zusammensetzung mit Ausnahme des Vernetzungssystems in die erste Vormischung in einem Mischer durch thermomechanisches Kneten des Ganzen bis zum Erreichen einer Maximaltemperatur zwischen 130°C und 200°C,
- Abkühlen des Ganzen auf eine Temperatur unter 100°C,
- anschließendes Einarbeiten des Vernetzungssystems,
- Kneten des Ganzen bis auf eine Maximaltemperatur unter 120°C.

**12.** Verfahren nach Anspruch 11, wobei die Vormischung in der Flüssigphase aus mindestens einem Elastomer-Latex und einer Dispersion von Ruß hergestellt wird.

**13.** Verfahren nach Anspruch 12, wobei die Vormischung gemäß den nachstehenden aufeinanderfolgenden Schritten hergestellt wird:

- Zuführen eines kontinuierlichen Stroms eines Dien-Elastomer-Latex zu einer Mischzone eines Koagulationsreaktors, der eine längliche Koagulationszone bildet, die sich zwischen der Mischzone und einer Auslassöffnung erstreckt,
- Zuführen eines kontinuierlichen Stroms eines Fluids, das einen Füllstoff umfasst, unter Druck zu der Mischzone eines Koagulationsreaktors, so dass ein koaguliertes Gemisch hergestellt wird,
- Trocknen des vorstehend erhaltenen Koagulums, um die erste Vormischung zu gewinnen.

**14.** Reifen oder Halbzeug, enthaltend mindestens eine Zusammensetzung nach einem der Ansprüche 1 bis 10.

## Claims

**1.** Rubber composition based on at least one diene elastomer, a reinforcing filler comprising at least carbon black having a CTAB specific surface, measured according to Standard NF T 45-007 of November 1987, of greater than or equal to 130 $m^2/g$, a plasticizing oil and also a crosslinking system, the dispersion of the filler in the elastomeric matrix having a Z score, as defined on page 6, of greater than or equal to 70, and in which the content of plasticizing oil varies from 2 to 50 parts per hundred parts by weight of elastomer.

**2.** Composition according to Claim 1, obtained from a first masterbatch comprising at least the diene elastomer and the carbon black, and exhibiting a dispersion of the carbon black in the elastomeric matrix having a Z score of greater than or equal to 80.

**3.** Composition based on at least one diene elastomer, a reinforcing filler comprising at least carbon black having a CTAB specific surface, measured according to Standard NF T 45-007 of November 1987, of greater than or equal to 130 $m^2/g$, a plasticizing oil and also a crosslinking system, obtained from a first masterbatch comprising at least the diene elastomer and the carbon black, and exhibiting a dispersion of the carbon black in the elastomeric matrix having a Z score, as defined on page 6, of greater than or equal to 80, and in which the content of plasticizing oil varies from 2 to 50 parts per hundred parts by weight of elastomer.

**4.** Composition according to any one of Claims 1 to 3, in which the content of plasticizing oil varies from 5 to 25 parts per hundred parts by weight of elastomer.

**5.** Composition according to any one of Claims 1 to 4, in which the first masterbatch is obtained by liquid-phase compounding starting from a diene elastomer latex and an aqueous dispersion of carbon black.

**6.** Composition according to Claim 5, in which the first masterbatch is obtained according to the following process stages:

- feeding a continuous stream of a diene elastomer latex to a mixing region of a coagulation reactor defining an elongated coagulation region extending between the mixing region and an outlet,

- feeding a continuous stream of a fluid comprising a filler under pressure to the mixing region of a coagulation reactor in order to form a coagulated mixture,
- drying the coagulum obtained above in order to recover the first masterbatch.

**7.** Composition according to any one of Claims 1 to 6, in which the diene elastomer is selected from the group consisting of polybutadienes, natural rubber, synthetic polyisoprenes, butadiene copolymers, isoprene copolymers and the mixtures of these elastomers.

**8.** Composition according to Claim 7, in which the diene elastomer is a natural rubber.

**9.** Composition according to any one of the preceding claims, which comprises at least one inorganic filler, preferably silica, and/or at least one second elastomer identical to or different from the first elastomer.

**10.** Composition according to Claim 9, in which an inorganic filler, preferably silica, is added to the first masterbatch and in which the content of carbon black varies from 20 to 80, preferably from 40 to 65, the content of inorganic filler varying from 5 to 50 phr, preferably from 10 to 30 phr.

**11.** Process for the preparation of a composition comprising at least one diene elastomer, a reinforcing filler comprising at least carbon black having a CTAB specific surface, measured according to Standard NF T 45-007 of November 1987, of greater than or equal to 130 $m^2/g$, a plasticizing oil and also a crosslinking system and wherein the content of plasticizing oil varies from 2 to 50 parts per hundred parts by weight of elastomer, which comprises the following stages:

- preparing a first masterbatch comprising the diene elastomer and the carbon black, this first masterbatch exhibiting a dispersion of the filler in the elastomeric matrix having a Z score, as defined on page 6, of greater than or equal to 80,
- incorporating the other constituents of the composition, with the exception of the crosslinking system, in the first masterbatch in a mixer, everything being kneaded thermomechanically until a maximum temperature of between 130°C and 200°C is reached,
- cooling the combined mixture to a temperature of less than 100°C,
- subsequently incorporating the crosslinking system,
- kneading everything up to a maximum temperature of less than 120°C.

**12.** Process according to Claim 11, in which the masterbatch is produced in the liquid phase from at least one elastomer latex and a dispersion of carbon black.

**13.** Process according to Claim 12, in which the masterbatch is produced according to the following successive stages:

- feeding a continuous stream of a diene elastomer latex to a mixing region of a coagulation reactor defining an elongated coagulation region extending between the mixing region and an outlet orifice,
- feeding a continuous stream of a fluid comprising a filler under pressure to the mixing region of a coagulation reactor in order to form a coagulated mixture,
- drying the coagulum obtained above in order to recover the first masterbatch.

**14.** Tyre or semi-finished product comprising at least one composition according to any one of Claims 1 to 10.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2011034585 A
- JP 2011057967 B
- JP 2007161818 B
- US 6048923 A
- FR 2740778
- US 6013718 A
- WO 2008141702 A
- FR 2765882
- US 5977238 A
- WO 0192402 A
- US 6815473 B
- WO 2004096865 A
- US 20060089445 A
- EP 1127909 A
- US 6503973 B
- WO 2009000750 A
- WO 2009000752 A
- WO 2006069792 A
- WO 2006069793 A
- WO 0316837 A
- WO 03002648 A
- US 2005016651 A
- WO 03002649 A
- US 2005016650 A
- WO 02083782 A
- US 2004132880 A
- WO 0230939 A
- US 6774255 B
- WO 0231041 A
- US 2004051210 A
- WO 2006125532 A
- WO 2006125533 A
- WO 2006125534 A
- WO 0210269 A


### Littérature non-brevet citée dans la description


- **S. OTTO et al.** *Kautschuk Gummi Kunststoffe*, 2005
- Latex concentrates : properties and composition. **K.F. GASELEY** ; **A.D.T. GORDON** ; **T.D. PENDLE**. Naturel Rubber Science and Technology. Oxford University Press, 1988
- **C. W. CARR** ; **1. M. KOLTHOFF** ; **E. J. MEEHAN**. Journal of Polymer Science. University of Minesota, 1950, vol. V, 201-206
- **E. J. VANDENBERG** ; **G. E. HULSE**. Industrial and Engineering Chemistry. Hercules Powder Company, 1948, vol. 40, 932-937
- **J. R. MILLER** ; **H. E. DIEM**. Industrial and Engineering Chemistry. B. F. Goodrich Chemical Co, 1954, vol. 46, 1065-1073